(19) Europäisches Patentamt
European Patent Office
Office européen des brevets

(11) **EP 4 068 422 A1**

(12) **EUROPEAN PATENT APPLICATION**
published in accordance with Art. 153(4) EPC

(43) Date of publication:
05.10.2022 Bulletin 2022/40

(21) Application number: 20892986.9

(22) Date of filing: 19.11.2020

(51) International Patent Classification (IPC):
$H01M\ 4/133$ (2010.01)     $H01M\ 4/134$ (2010.01)
$H01M\ 4/36$ (2006.01)      $H01M\ 4/48$ (2010.01)

(52) Cooperative Patent Classification (CPC):
H01M 4/133; H01M 4/134; H01M 4/36; H01M 4/48;
Y02E 60/10

(86) International application number:
PCT/JP2020/043104

(87) International publication number:
WO 2021/106730 (03.06.2021 Gazette 2021/22)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 27.11.2019 JP 2019214466

(71) Applicant: SANYO Electric Co., Ltd.
Daito-shi
Osaka 574-8534 (JP)

(72) Inventors:
• YOKOI, Mai
  Osaka-shi, Osaka 540-6207 (JP)
• MIZUKOSHI, Fumikazu
  Osaka-shi, Osaka 540-6207 (JP)
• TASHITA, Takamitsu
  Osaka-shi, Osaka 540-6207 (JP)
• KATOGI, Akihiro
  Osaka-shi, Osaka 540-6207 (JP)

(74) Representative: Novagraaf International SA
Chemin de l'Echo 3
1213 Onex, Geneva (CH)

(54) **NON-AQUEOUS ELECTROLYTE SECONDARY BATTERY**

(57) The purpose of the present disclosure is to provide a non-aqueous electrolyte secondary battery that has a high capacity and that achieves excellent suppression of deterioration in quick charge cycle characteristics. A non-aqueous electrolyte secondary battery according to an aspect of the present disclosure is provided with a negative electrode having: a negative electrode collector; a first negative electrode mixture layer provided on the surface of the negative electrode collector; and a second negative electrode mixture layer provided on the surface of the first negative electrode mixture layer. Each of the first negative electrode mixture layer and the second negative electrode mixture layer contains graphite particles. The ratio (S2/S1) of the interparticle porosity (S2) of the graphite particles in the second negative electrode mixture layer to the interparticle porosity (S1) of the graphite particles in the first negative electrode mixture layer is 1.1-2.0. The ratio (D2/D1) of the filling density (D2) of the second negative electrode mixture layer to the filling density (D1) of the first negative electrode mixture layer is 0.9-1.1.

Figure 2

**Description**

TECHNICAL FIELD

The present disclosure relates to a non-aqueous electrolyte secondary battery.

BACKGROUND

Non-aqueous electrolyte secondary batteries that employ graphite particles as the negative electrode active material are widely used as secondary batteries having high energy density. While battery capacity can be increased by increasing the packing density of the negative electrode active material in the negative electrode mixture layer, when the packing density is increased by increasing the amount of the negative electrode active material per unit volume, voids between the negative electrode active material particles become smaller, and permeability of the electrolyte solution becomes degraded due to poor circulation, causing the problem that the battery capacity decreases as a result of repeated fast charging.

For example, in the inventions disclosed in Patent Literature 1 to 3, the packing density of the negative electrode active material in the negative electrode mixture layer is set lower on the outer surface side than on the current collector side, so that larger voids are provided between the negative electrode active material particles on the outer surface side to thereby improve permeability of the electrolyte solution. However, since the amount of the negative electrode active material per unit volume of the negative electrode mixture layer becomes less, there is the problem that the battery capacity becomes decreased.

CITATION LIST

PATENT LITERATURE

PATENT LITERATURE 1: Japanese Unexamined Patent Application Publication No. 2003-77463

PATENT LITERATURE 2: Japanese Unexamined Patent Application Publication No. 2006-196457

PATENT LITERATURE 3: Japanese Unexamined Patent Application Publication No. 2015-511389

SUMMARY

TECHNICAL PROBLEM

Therefore, an object of the present disclosure is to provide a non-aqueous electrolyte secondary battery having a high capacity and achieving excellent suppression of degradation of the quick charge cycle characteristic.

SOLUTION TO PROBLEM

A non-aqueous electrolyte secondary battery according to one aspect of the present disclosure has a negative electrode including a negative electrode current collector, a first negative electrode mixture layer provided on a surface of the negative electrode current collector, and a second negative electrode mixture layer provided on a surface of the first negative electrode mixture layer. The first negative electrode mixture layer and the second negative electrode mixture layer contain graphite particles. The ratio (S2/S1) of the interparticle porosity (S2) of the graphite particles in the second negative electrode mixture layer to the interparticle porosity (S1) of the graphite particles in the first negative electrode mixture layer is 1.1 to 2.0. The ratio (D2/D1) of the packing density (D2) of the second negative electrode mixture layer to the packing density (D1) of the first negative electrode mixture layer is 0.9 to 1.1.

ADVANTAGEOUS EFFECTS OF INVENTION

According to one aspect of the present disclosure, it is possible to provide a non-aqueous electrolyte secondary battery having a high capacity and achieving excellent suppression of degradation of the quick charge cycle characteristic.

BRIEF DESCRIPTION OF DRAWINGS

FIG. 1 is an axial sectional view of a cylindrical secondary battery according to an example embodiment.
FIG. 2 is a cross-sectional view of a negative electrode according to the example embodiment.

DESCRIPTION OF EMBODIMENTS

As noted above, in conventional batteries, there are difficulties in simultaneously achieving high capacity and excellent suppression of degradation of the quick charge cycle characteristic. As a result of diligent studies, the present inventors have found that, by configuring the outer surface side portion of the negative electrode mixture layer to contain graphite particles having a low internal porosity, while increasing the interparticle porosity of the graphite particles on the outer surface side, the density can be maintained to be substantially the same as that on the negative electrode current collector side. This led to devising a non-aqueous electrolyte secondary battery having features as described below, which has a high capacity and achieves excellent suppression of degradation of the quick charge cycle characteristic.

A non-aqueous electrolyte secondary battery according to one aspect of the present disclosure comprises a negative electrode including a negative electrode current collector, a first negative electrode mixture layer provided on a surface of the negative electrode current collector, and a second negative electrode mixture layer provided on a surface of the first negative electrode mixture layer. The first negative electrode mixture layer and the second negative electrode mixture layer contain graphite particles. The ratio (S2/S1) of the interparticle porosity (S2) of the graphite particles in the second negative electrode mixture layer to the interparticle porosity (S1) of the graphite particles in the first negative electrode mixture layer is 1.1 to 2.0. The ratio (D2/D1) of the packing density (D2) of the second negative electrode mixture layer to the packing density (D1) of the first negative electrode mixture layer is 0.9 to 1.1.

An example embodiment of a cylindrical secondary battery according to the present disclosure will now be described in detail by reference to the drawings. In the following description, specific shapes, materials, numerical values, directions, and so on are given as examples for facilitating understanding of the present invention, and may be changed as appropriate in accordance with specifications of the cylindrical secondary battery. Further, the outer casing is not limited to being cylindrical, and may be, for example, rectangular or the like. Furthermore, when the following description refers to a plurality of embodiments or variants, it is envisioned from the beginning that characteristic features thereof may be used in combination as appropriate.

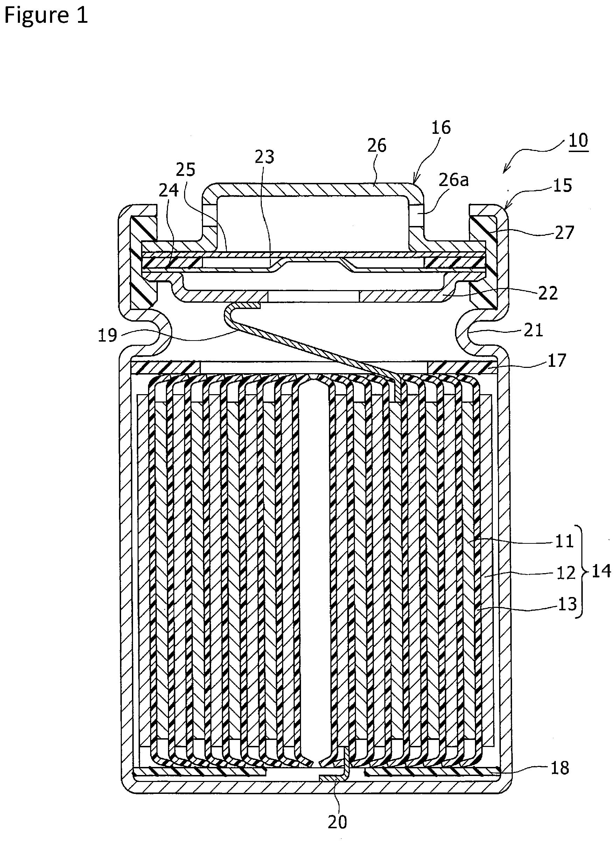

FIG. 1 is an axial sectional view of a cylindrical secondary battery 10 according to an example embodiment. In the secondary battery 10 shown in FIG. 1, an electrode assembly 14 and a non-aqueous electrolyte (not shown in drawing) are housed in an outer casing 15. The electrode body 14 has a spiral structure formed by winding a positive electrode 11 and a negative electrode 12 with separators 13 disposed between the electrodes 11, 12. In the following, for convenience of explanation, a side toward the sealing assembly 16 will be referred to as "top", and a side toward the bottom portion of the outer casing 15 will be referred to as "bottom".

By having the open end of the outer casing 15 closed with the sealing assembly 16, the inside of the secondary battery 10 is hermetically sealed. Above and below the electrode assembly 14, insulating plates 17 and 18 are provided respectively. A positive electrode lead 19 extends upward through a through hole in the insulating plate 17, and is welded to the lower surface of a filter 22, which is the bottom plate of the sealing assembly 16. In the secondary battery 10, a cap 26, which is the top plate of the sealing assembly 16 electrically connected to the filter 22, serves as the positive electrode terminal. Meanwhile, a negative electrode lead 20 extends toward the bottom portion of the outer casing 15 through a through hole in the insulating plate 18, and is welded to the inner surface of the bottom portion of the outer casing 15. In the secondary battery 10, the outer casing 15 serves as the negative electrode terminal. In case where the negative electrode lead 20 is provided at an end edge portion, the negative electrode lead 20 extends on the outside of the insulating plate 18 and toward the bottom portion of the outer casing 15, and is welded to the inner surface of the bottom portion of the outer casing 15.

The outer casing 15 is, for example, a bottomed cylindrical metal outer can. A gasket 27 is provided between the outer casing 15 and the sealing assembly 16 to ensure airtightness inside the secondary battery 10. The outer casing 15 has a grooved portion 21 that is formed by, for example, pressing a side surface portion from the outside, and that supports the sealing assembly 16. The grooved portion 21 is preferably formed in an annular shape along the circumferential direction of the outer casing 15, and supports the sealing assembly 16 on its upper face via the gasket 27.

The sealing assembly 16 comprises the filter 22, a lower valve member 23, an insulating member 24, an upper valve member 25, and the cap 26, which are laminated in this order from the electrode assembly 14 side. Each of the members constituting the sealing assembly 16 has, for example, a disk shape or a ring shape, and the respective members except the insulating member 24 are electrically connected to each other. The lower valve member 23 and the upper valve member 25 are connected to each other at their central portions, and the insulating member 24 is interposed between peripheral edge portions of these valve members. When the internal pressure of the battery increases due to abnormal heat generation, for example, the lower valve member 23 ruptures, which causes the upper valve member 25 to swell toward the cap 26 and move away from the lower valve member 23, and the electrical connection between the two valve members is thereby cut off. When the internal pressure increases further, the upper valve member 25 ruptures, and gas is discharged from an opening 26a in the cap 26.

A detailed description will now be given regarding the positive electrode 11, the negative electrode 12, the separators 13, and the non-aqueous electrolyte, which constitute the secondary battery 10, and in particular regarding the negative electrode active material contained in the negative electrode mixture layer 32 constituting the negative electrode 12.

[Negative Electrode]

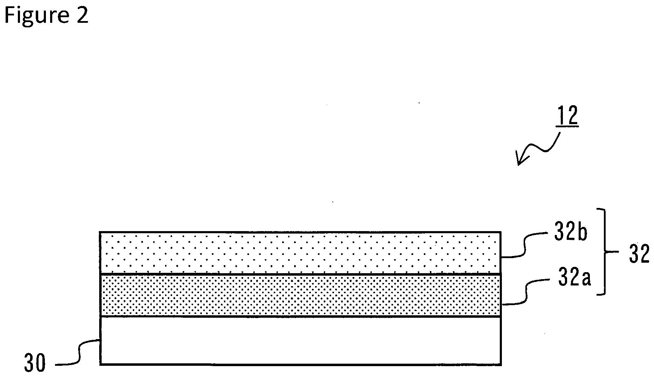

FIG. 2 is a cross-sectional view of the negative electrode 12 according to the example embodiment. The negative electrode 12 comprises a negative electrode current collector 30, a first negative electrode mixture layer 32a provided on a surface of the negative electrode current collector 30, and a second negative electrode mixture layer 32b provided on a surface of the first negative electrode mixture layer 32a. The thicknesses of the first negative electrode mixture layer 32a and the second negative electrode mixture layer 32b may be the same or different from each other. The ratio of the thicknesses of the first negative electrode mixture layer 32a and the second negative electrode mixture layer 32b is, for example, 3:7 to 7:3, preferably 4:6 to 6:4, and more preferably 5:5 to 6:4.

As the negative electrode current collector 30, it is possible to use, for example, a foil of a metal that is stable in the potential range of the negative electrode such as copper, a film having such a metal disposed on its surface layer, and the like. The thickness of the negative electrode current collector 30 is, for example, 5 $\mu$m to 30 $\mu$m.

The first negative electrode mixture layer 32a and the second negative electrode mixture layer 32b (hereinafter, the first negative electrode mixture layer 32a and the second negative electrode mixture layer 32b may be collectively referred to as the negative electrode mixture layer 32) include graphite particles. Further, the negative electrode mixture layer 32 preferably contains a binder or the like. Examples of the binder include fluororesin, PAN, polyimide resin, acrylic resin, polyolefin resin, styrene-butadiene rubber (SBR), nitrile-butadiene rubber (NBR), carboxymethyl cellulose (CMC) or a salt thereof, polyacrylic acid (PAA) or a salt thereof (which may be PAA-Na, PAA-K, or the like, or a partially neutralized salt), polyvinyl alcohol (PVA), and the like. These may be used alone or by combining two or more thereof.

Examples of the graphite particles used in the present embodiment include natural graphite and artificial graphite. The interplanar spacing ($d_{002}$) of the (002) plane of the graphite particles used in the present embodiment as determined by a wide-angle X-ray diffraction method is, for example, preferably 0.3354 nm or more, and more preferably 0.3357 nm or more, and also preferably less than 0.340 nm, and more preferably 0.338 nm or less. Further, the crystallite size (Lc(002)) of the graphite particles used in the present embodiment as determined by an X-ray diffraction method is, for example, preferably 5 nm or larger, and more preferably 10 nm or larger, and also preferably 300 nm or smaller, and more preferably 200 nm or smaller. When the interplanar spacing (d002) and the crystallite size (Lc(002)) are within the above-noted ranges, the battery capacity of the secondary battery 10 tends to be larger than when the above-noted ranges are not satisfied.

The graphite particles contained in the first negative electrode mixture layer 32a can for example be produced as follows. Coke (i.e., the precursor), which serves as the main raw material, is crushed to a predetermined size, agglomerated with a binder, and then after being pressure-molded into blocks, fired at a temperature of 2600 °C or higher to cause graphitization. The graphitized block-shaped molded product is pulverized and sieved to obtain graphite particles having a desired size. Here, by adjusting the particle size of the crushed precursor, the particle size of the precursor in the agglomerated state, and the like, the internal porosity of the graphite particles can be adjusted. For example, the average particle size (i.e., the volume-based median diameter D50; the same applies hereinafter) of the crushed precursor is preferably in the range of 12 $\mu$m to 20 $\mu$m. The internal porosity of the graphite particles can also be adjusted by the amount of volatile component added to the block-shaped molded product. In cases where a part of the binder added to the coke (i.e., the precursor) volatilizes during firing, the binder can be employed as the volatile component. Pitch is an example of such a binder.

The graphite particles contained in the second negative electrode mixture layer 32b can for example be produced as follows. Coke (i.e., the precursor), which serves as the main raw material, is crushed to a predetermined size, then after being agglomerated with a binder such as pitch, fired at a temperature of 2600 °C or higher to graphitize, and by subsequently sieving the product, graphite particles of a desired size can be obtained. Here, by adjusting the particle size of the crushed precursor, the particle size of the precursor in the agglomerated state, and the like, the internal porosity of the graphite particles can be adjusted. For example, the average particle size of the crushed precursor is preferably in the range of 12 $\mu$m to 20 $\mu$m.

The ratio (S2/S1) of the interparticle porosity (S2) the graphite particles in the second negative electrode mixture layer 32b to the interparticle porosity (S1) of the graphite particles in the first negative electrode mixture layer 32a is 1.1 to 2.0, preferably 1.1 to 1.7, and more preferably 1.1 to 1.5. When S2/S1 is lower than 1.1, permeability of the electrolyte solution becomes poor, and the battery capacity decreases as a result of repeated fast charging. Further, when S2/S1 is higher than 2.0, the packing density of the second negative electrode mixture layer 32b, which will be described later, cannot be made substantially equal to the packing density of the first negative electrode mixture layer 32a, and the battery capacity becomes low. Here, an interparticle porosity of graphite particles is a two-dimensional value determined from a ratio of an area of voids between the graphite particles to a cross-sectional area of the negative electrode mixture layer 32. S2/S1 can be determined by calculating the interparticle porosity (S1) of the graphite particles in the first negative electrode mixture layer 32a and the interparticle porosity (S2) of the graphite particles in the second negative electrode mixture layer 32b according to the following steps.

<Method of Measurement of Interparticle Porosity of Graphite Particles>

(1) Expose a cross section of the negative electrode mixture layer. An example method of exposing a cross section is a method in which a part of the negative electrode is cut out and is processed with an ion milling device (for example, IM4000PLUS manufactured by Hitachi High-Tech Corporation) to expose a cross section of the negative electrode mixture layer.

(2) Using a scanning electron microscope, obtain a backscattered electron image of the exposed cross section of the negative electrode mixture layer for each of the first negative electrode mixture layer 32a and the second negative electrode mixture layer 32b. The magnification applied in obtaining the backscattered electron images is, for example, 800 times.

(3) Load the cross-sectional images obtained as described above into a computer, and perform binarization thereon using an image analysis software (for example, ImageJ manufactured by the US National Institutes of Health) to obtain binarized images in which the particle cross sections in the cross-sectional images are converted into black color, and voids present in and between the particle cross sections are converted into white color.

(4) In the binarized images of the first negative electrode mixture layer 32a and the second negative electrode mixture layer 32b, among the voids converted into white color, those other than voids inside the graphite particles (i.e., pores not connected to a particle surface) and pores in which portions connected to a graphite particle surface has a width of 3 $\mu$m or smaller are recognized as voids between the graphite particles, and the area of the voids between the graphite particles is calculated. The interparticle porosity of the graphite particles can be calculated based on the following formula.

$$\text{Interparticle Porosity of Graphite Particles} = \text{Area of Voids Between Graphite Particles} \,/\, \text{Area of Negative Electrode Mixture Layer Cross Section} \times 100$$

S1 and S2 are respectively determined as average values obtained by carrying out the above measurement three times, and S1/S2 can be calculated from these values.

The ratio (D2/D1) of the packing density (D2) of the second negative electrode mixture layer 32b to the packing density (D1) of the first negative electrode mixture layer 32a is 0.9 to 1.1. When D2/D1 is in this range while S2/S1 is 1.1 to 2.0, it is possible to obtain a battery having a high capacity and achieving excellent suppression of degradation of the quick charge cycle characteristic. S2/S1 and D2/D1 can be set to within the above-noted ranges by, for example, setting the internal porosity of the graphite particles contained in the first negative electrode mixture layer 32a higher than the internal porosity of the graphite particles contained in the second negative electrode mixture layer 32b.

The packing density (D1) of the first negative electrode mixture layer 32a and the packing density (D2) of the second negative electrode mixture layer 32b can be 1.3 g/m$^3$ to 2.0 g/m$^3$. With this feature, it is possible to configure the battery to have a high capacity.

The packing density of the negative electrode mixture layer 32 is the mass per unit volume of the negative electrode mixture layer 32. First, using the negative electrode 12, the mixture mass per unit area of each of the first negative electrode mixture layer 32a and the second negative electrode mixture layer 32b is measured. Further, the mixture layer thickness of each of the first negative electrode mixture layer 32a and the second negative electrode mixture layer 32b is measured from the cross-sectional image obtained when calculating the interparticle porosity. In cases where the mixture layer thickness is not uniform, measurements can be made at 10 points in the above-noted image, and an average value thereof can be used as the mixture layer thickness. By dividing the mixture mass per unit area by the mixture layer thickness, each of the packing density (D1) of the first negative electrode mixture layer 32a and the packing density (D2) of the second negative electrode mixture layer 32b can be calculated. From these values, the ratio (D2/D1) of the packing density (D2) of the second negative electrode mixture layer 32b to the packing density (D1) of the first negative electrode mixture layer 32a can be obtained.

Next, a specific method for forming the first negative electrode mixture layer 32a and the second negative electrode mixture layer 32b will be described. For example, first, a negative electrode active material containing graphite particles (hereinafter may be referred to as first graphite particles), a binder, and a solvent such as water are mixed to prepare a first negative electrode mixture slurry. Apart from this, a negative electrode active material containing graphite particles different from the first graphite particles (hereinafter may be referred to as second graphite particles), a binder, and a solvent such as water are mixed to prepare a second negative electrode mixture slurry. Then, the first negative electrode mixture slurry is applied to and dried on both sides of a negative electrode current collector, and subsequently, over the applied coating of the first negative electrode mixture slurry, the second negative electrode mixture slurry is applied to and dried on both sides. Further, the first negative electrode mixture layer 32a and the second negative electrode mixture layer 32b are rolled with a roller, and the negative electrode mixture layer 32 can thereby be formed.

Even when the first negative electrode mixture layer 32a and the second negative electrode mixture layer 32b are to be rolled at the same time as described above, the packing properties of the first graphite particles and the second graphite particles at the time of rolling are not necessarily the same. For example, by changing the particle size distributions of the first graphite particles and the second graphite particles, the packing densities of the first negative electrode mixture layer 32a and the second negative electrode mixture layer 32b can be adjusted. Further, by setting the internal porosity of the second graphite particles lower than the internal porosity of the first graphite particles, it becomes possible to increase the interparticle porosity in the second negative electrode mixture layer 32b without excessively reducing the packing density. Although the above-described method involves applying the second negative electrode mixture slurry after applying and drying the first negative electrode mixture slurry, the second negative electrode mixture slurry may alternatively be applied after applying but before drying the first negative electrode mixture slurry. Further, the first negative electrode mixture slurry may be applied, dried, and rolled, and subsequently the second negative electrode mixture slurry may be applied onto the first negative electrode mixture layer 32a. By changing the rolling conditions between the first negative electrode mixture layer 32a and the second negative electrode mixture layer 32b, the respective packing densities of these layers 32a, 32b can be adjusted more freely.

At least one of the first negative electrode mixture layer 32a and the second negative electrode mixture layer 32b may contain a Si-based material. The Si-based material is a material capable of reversibly occluding and releasing lithium ions, and functions as a negative electrode active material. Examples of the Si-based material include Si, an alloy containing Si, a silicon oxide such as $SiO_x$ (where x is 0.8 to 1.6), and the like. The Si-based material is a negative electrode material capable of improving the battery capacity as compared to graphite particles. In terms of improving the battery capacity and suppressing degradation of the quick charge cycle characteristic, the content of the Si-based material is, for example, preferably 1 % by mass to 10 % by mass, and more preferably 3 % by mass to 7 % by mass, relative to the mass of the negative electrode active material.

Other materials capable of reversibly occluding and releasing lithium ions include metals that form an alloy with lithium such as tin (Sn), alloys and oxides containing metal elements such as Sn, and the like. The negative electrode active material may contain these other materials, and the content of these other materials is, for example, preferably 10 % by mass or less relative to the mass of the negative electrode active material.

[Positive Electrode]

The positive electrode 11 is composed of a positive electrode current collector such as a metal foil, and a positive electrode mixture layer formed on the positive electrode current collector. As the positive electrode current collector, it is possible to use a foil of a metal that is stable in the potential range of the positive electrode such as aluminum, a film having such a metal disposed on its surface layer, or the like. The positive electrode mixture layer contains, for example, a positive electrode active material, a binder, a conductive agent, and the like.

The positive electrode 11 can be produced by, for example, applying a positive electrode mixture slurry containing the positive electrode active material, the binder, the conductive agent, and the like onto the positive electrode current collector, and drying the applied slurry to form the positive electrode mixture layer, and then rolling this positive electrode mixture layer.

Examples of the positive electrode active material include lithium transition metal oxides containing transition metal elements such as Co, Mn, and Ni. The lithium transition metal oxides are, for example, $Li_xCoO_2$, $Li_xNiO_2$, $Li_xMnO_2$, $Li_xCo_yNi_{1-y}O_2$, $Li_xCo_yM_{1-y}O_z$, $Li_xNi_{1-y}M_yO_z$, $Li_xMn_2O_4$, $Li_xMn_{2-y}M_yO_4$, $LiMPO_4$, and $Li_2MPO_4F$ (where M is at least one of Na, Mg, Sc, Y, Mn, Fe, Co, Ni, Cu, Zn, Al, Cr, Pb, Sb, and B; $0 < x \leq 1.2$, $0 < y \leq 0.9$, and $2.0 \leq z \leq 2.3$). These may be used alone or by mixing a plurality thereof. In terms of enabling an increase in the capacity of the non-aqueous electrolyte secondary battery, the positive electrode active material preferably contains a lithium nickel composite oxide such as $Li_xNiO_2$, $Li_xCo_yNi_{1-y}O_2$, $Li_xNi_{1-y}M_yO_z$, (where M is at least one of Na, Mg, Sc, Y, Mn, Fe, Co, Ni, Cu, Zn, Al, Cr, Pb, Sb, and B; $0 < x \leq 1.2$, $0 < y \leq 0.9$, and $2.0 \leq z \leq 2.3$), and the like.

Examples of the conductive agent include carbon-based particles such as carbon black (CB), acetylene black (AB), Ketjen black, and graphite. These may be used alone or by combining two or more thereof.

Examples of the binder include fluororesins such as polytetrafluoroethylene (PTFE) and polyvinylidene fluoride (PVdF), polyacrylonitrile (PAN), polyimide resins, acrylic resins, and polyolefin resins. These may be used alone or by combining two or more thereof.

[Separator]

For the separator 13, for example, a porous sheet having ion permeability and insulating property is used. Specific examples of the porous sheet include a microporous thin film, a woven fabric, and a non-woven fabric. As the material of the separator, olefin resins such as polyethylene and polypropylene, cellulose, and the like are preferred. The separator 13 may be a laminate having a cellulose fiber layer and a thermoplastic resin fiber layer made of olefin resin or the like. The separator 13 may alternatively be a multilayer separator including a polyethylene layer and a polypropylene layer, and a separator 13 having a surface coated with a material such as aramid resin or ceramic may be used.

[Non-Aqueous Electrolyte]

The non-aqueous electrolyte includes a non-aqueous solvent and an electrolyte salt dissolved in the non-aqueous solvent. The non-aqueous electrolyte is not limited to a liquid electrolyte (or electrolyte solution), and may be a solid electrolyte that uses a gel polymer or the like. As the non-aqueous solvent, it is possible to use, for example, an ester, an ether, a nitrile such as acetonitrile, an amide such as dimethylformamide, a mixed solvent containing two or more of the foregoing, or the like. The non-aqueous solvent may contain a halogen-substituted product obtained by substituting at least part of the hydrogens in the above solvents with a halogen atom such as fluorine.

Examples of the above-noted ester include: cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as $\gamma$-butyrolactone and $\gamma$-valerolactone; and chain carboxylates such as methyl acetate, ethyl acetate, propyl acetate, methyl propionate (MP), ethyl propionate, and $\gamma$-butyrolactone.

Examples of the above-noted ether include: cyclic ethers such as 1,3-dioxolane, 4-methyl-1,3-dioxolane, tetrahydrofuran, 2-methyltetrahydrofran, propylene oxide, 1,2-butylene oxide, 1,3-dioxane, 1,4-dioxane, 1,3,5-trioxane, furan, 2-methylfuran, 1,8-cineole, and crown ethers; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxym ethane, 1,1-diethoxyethane, triethylene glycol dimethyl ether, and tetraethylene glycol dimethyl ether.

As the above-noted halogen-substituted product, it is preferable to use fluorinated cyclic carbonates such as fluoroethylene carbonate (FEC), fluorinated chain carbonates, fluorinated chain carboxylates such as fluoro methyl propionate (FMP), and the like.

The electrolyte salt is preferably lithium salt. Examples of the lithium salt include $LiBF_4$, $LiClO_4$, $LiPF_6$, $LiAsF_6$, $LiSbF_6$, $LiAlCl_4$, LiSCN, $LiCF_3SO_3$, $LiCF_3CO_2$, $Li(P(C_2O_4)F_4)$, $LiPF_{6-x}(C_nF_{2n+1})_x$ (where $1<x<6$, and n is 1 or 2), $LiB_{10}Cl_{10}$, LiCl, LiBr, LiI, chloroborane lithium, lower aliphatic lithium carboxylate, borates such as $Li_2B_4O_7$ and $Li(B(C_2O_4)F_2)$, and imide salts such as $LiN(SO_2CF_3)_2$ and $LiN(C_1F_{2l+1}SO_2)(C_mF_{2m+1}SO_2)$ (where 1 and m each are an integer of 0 or greater). As the lithium salt, these may be used alone or by mixing a plurality thereof. Among the foregoing, it is preferable to use $LiPF_6$ in consideration of ion conductivity, electrochemical stability, and the like. The concentration of the lithium salt is preferably 0.8 to 1.8 mol per 1 liter of the solvent.

EXAMPLES

While the present disclosure is further described below by reference to Examples, the present disclosure is not limited to these Examples.

<Example 1>

[Production of Positive Electrode]

As the positive electrode active material, aluminum-cobalt-containing lithium nickel-cobalt oxide ($LiNi_{0.88}Co_{0.09}Al_{0.03}O_2$) was used. 100 parts by mass of this positive electrode active material, 1 part by mass of graphite that serves as a conductive agent, and 0.9 parts by mass of polyvinylidene fluoride powder that serves as a binder were mixed, and N-methyl-2-pyrrolidone was further added in an appropriate amount to thereby prepare a positive electrode mixture slurry. This slurry was applied using a doctor blade method to both sides of a positive electrode current collector made of an aluminum foil (having a thickness of 15 $\mu$m), and the applied coating was dried and then rolled using a roller. A positive electrode having positive electrode mixture layers formed on both sides of the positive electrode current collector was thereby produced.

[Production of Graphite Particles A]

Coke was crushed to an average particle size of 17 $\mu$m, and pitch that serves as a binder was added to the crushed coke to cause agglomeration. An isotropic pressure was applied to the agglomerates to produce a block-shaped molded product having a density of 1.6 g/cm$^3$ to 1.9 g/cm$^3$. The block-shaped molded product was fired at a temperature of 2800 °C to cause graphitization. Next, the graphitized block-shaped molded product was pulverized, and was sieved using a 250-mesh sieve to obtain graphite particles A having an average particle size of 23 $\mu$m.

[Production of Graphite Particles B]

Coke was crushed to an average particle size of 13 $\mu$m, and pitch that serves as a binder was added to the crushed coke to cause the coke to agglomerate to an average particle size of 18 $\mu$m. The agglomerates were fired at a temperature of 2800 °C to cause graphitization, and was subsequently sieved using a 250-mesh sieve to obtain graphite particles B having an average particle size of 23 $\mu$m. In producing the graphite particles B, by reducing the amount of pitch added to the coke to less than the amount of pitch used in producing the graphite particles A and adjusting the average particle size of the above-noted agglomerates, the graphite particles B having an internal porosity lower than that of the graphite particles A were produced.

[Production of Negative Electrode]

95 parts by mass of the graphite particles A and 5 parts by mass of SiO were mixed, and this mixture was used as the negative electrode active material A. The negative electrode active material A, carboxymethyl cellulose (CMC), and styrene-butadiene copolymer rubber (SBR) were mixed so that the mass ratio was 100:1:1, and this mixture was kneaded in water to prepare a first negative electrode mixture slurry. Further, 95 parts by mass of the graphite particles B and 5 parts by mass of SiO were mixed, and this mixture was used as the negative electrode active material B. The negative electrode active material B, carboxymethyl cellulose (CMC), and styrene-butadiene copolymer rubber (SBR) were mixed so that the mass ratio was 100:1:1, and this mixture was kneaded in water to prepare a second negative electrode mixture slurry.
The first negative electrode slurry was applied using a doctor blade method to both sides of a negative electrode current collector made of a copper foil, and then dried to form a first negative electrode mixture layer. Further, the above-noted second negative electrode slurry was applied onto the first negative electrode mixture layer, and then dried to form a second negative electrode mixture layer. Here, the ratio of applied masses of the first negative electrode mixture slurry and the second negative electrode mixture slurry per unit area was 5:5. The first negative electrode mixture layer and the second negative electrode mixture layer were rolled using a roller, and a negative electrode was thereby produced.

[Preparation of Non-Aqueous Electrolyte]

Into 100 parts by mass of a non-aqueous solvent obtained by mixing ethylene carbonate (EC) and dimethyl carbonate at a volume ratio of 1:3, 5 parts by mass of vinylene carbonate (VC) were added, and $LiPF_6$ was dissolved at a concentration of 1.5 mol/L. This mixture was used as the non-aqueous electrolyte.

[Production of Non-Aqueous Electrolyte Secondary Battery]

(1) After attaching a positive electrode lead to the positive electrode current collector and attaching a negative electrode lead to the negative electrode current collector, a polyethylene microporous film was placed between the positive electrode and the negative electrode and wound together to produce a spiral-type electrode assembly.

(2) Insulating plates were arranged above and below the electrode assembly. The negative electrode lead was welded to an outer casing, the positive electrode lead was welded to a sealing assembly, and the electrode assembly was housed in the outer casing.

(3) After injecting the non-aqueous electrolyte into the outer casing by a depressurization method, the opening of the outer casing was sealed with the sealing assembly via a gasket, and this product was used as the non-aqueous electrolyte secondary battery.

<Example 2>

The same procedure as in Example 1 was carried out except that graphite particles C produced as described below were used in place of the graphite particles B.

[Production of Graphite Particles C]

Coke was crushed to an average particle size of 12 $\mu$m. Pitch that serves as a binder was added to the crushed coke to cause the coke to agglomerate to an average particle size of 18 $\mu$m. The agglomerates were fired at a temperature of 2800 °C to cause graphitization, and subsequently sieved to produce graphite particles C having an average particle size of 23 $\mu$m. The amount of pitch used in producing the graphite particles C was less than the amount of pitch used in producing the graphite particles A and more than the amount of pitch used in producing the graphite particles B. By thus adjusting the average particle size of the coke and the amount of pitch, the internal porosity of the graphite particles C was set lower than the internal porosity of the graphite particles A and higher than the internal porosity of the graphite particles B.

<Example 3>

The same procedure as in Example 1 was carried out except that the ratio of applied masses of the first negative electrode mixture slurry and the second negative electrode mixture slurry per unit area was 6:4.

<Example 4>

The same procedure as in Example 1 was carried out except that the ratio of applied masses of the first negative electrode mixture slurry and the second negative electrode mixture slurry per unit area was 4:6.

<Comparative Example 1>

The same procedure as in Example 1 was carried out except that the graphite particles C were used in place of the graphite particles A, and the graphite particles A were used in place of the graphite particles B.

<Comparative Example 2>

The same procedure as in Example 1 was carried out except that, in place of the graphite particles A and the graphite particles B, a mixture of the graphite particles A and the graphite particles C mixed at a mass ratio of 1:1 was used.

[Calculation of Interparticle Porosity of Graphite Particles]

At an ambient temperature of 25 °C, the non-aqueous electrolyte secondary battery of each of the Examples and Comparative Examples was subjected to constant current charging at 0.2 C (920 mA) until reaching 4.2 V, and subsequently subjected to constant voltage charging at 4.2 V until reaching C/50. After that, constant current discharge was performed at 0.2 C until reaching 2.5 V. This charging and discharging process was used as one cycle, and 5 cycles were carried out. The negative electrode was taken out from the non-aqueous electrolyte secondary battery of each of the Examples and Comparative Examples after 5 cycles, and the interparticle porosities of the graphite particles were calculated. Table 1 shows the results for each of the Examples and Comparative Examples.

[Measurement of Capacity Retention Rate in Quick Charge Cycles]

At an ambient temperature of 25 °C, the non-aqueous electrolyte secondary battery of each of the Examples and Comparative Examples was subjected to constant current charging at 1 C (4600 mA) until reaching 4.2 V, and subsequently subjected to constant voltage charging at 4.2 V until reaching 1/50 C. After that, constant current discharge was performed at 0.5 C until reaching 2.5 V. This charging and discharging process was used as one cycle, and 100 cycles were carried out. Using the following formula, the capacity retention rate in quick charge cycles of the non-aqueous electrolyte secondary battery of each of the Examples and Comparative Examples was determined. The discharge capacity in the first cycle was assumed to be the battery capacity.

$$\text{Capacity Retention Rate} = (\text{Discharge Capacity in the 100th Cycle} / \text{Discharge Capacity in the 1st Cycle}) \times 100$$

Table 1 summarizes the results of the capacity retention rate in quick charge cycles and the battery capacity for the non-aqueous electrolyte secondary battery of each of the Examples and Comparative Examples. Table 1 also shows D1, D2, D2/D1, and S2/S1. Here, a higher value of capacity retention rate in quick charge cycles indicates superior suppression of degradation of the quick charge cycle characteristic.

[Table 1]

| | Graphite Particles | | Packing Density (g/m$^3$) | | Packing Density Ratio (D2/D1) | Interparticle Porosity Ratio (S2/S1) | Capacity Retention Rate (%) | Battery Capacity (mAh) |
|---|---|---|---|---|---|---|---|---|
| | First Layer | Second Layer | First Layer (D1) | Second Layer (D2) | | | | |
| Example 1 | A | B | 1.59 | 1.49 | 0.94 | 1.39 | 85.6 | 4572 |
| Example 2 | A | C | 1.57 | 1.42 | 0.91 | 1.13 | 81.4 | 4607 |
| Example 3 | A | B | 1.62 | 1.51 | 0.93 | 1.43 | 88.9 | 4578 |
| Example 4 | A | B | 1.48 | 1.49 | 1.01 | 1.49 | 81.7 | 4573 |
| Comparative Example 1 | C | A | 1.45 | 1.45 | 1.00 | 0.79 | 60.3 | 4583 |
| Comparative Example 2 | A+C | | 1.51 | 1.51 | 1.00 | 0.94 | 68.1 | 4567 |
| First Layer: first negative electrode mixture layer; Second Layer: second negative electrode mixture layer | | | | | | | | |

In the Examples in which the interparticle porosity of the second negative electrode mixture layer was higher than that of the first negative electrode mixture layer, the quick charge cycle characteristic was improved. It is considered that this resulted because, by setting the interparticle porosity of the second negative electrode mixture layer higher, the electrolyte solution easily permeated from the mixture layer surface facing the positive electrode toward the current collector, and the electrolyte solution easily permeated the entire negative electrode mixture layer. Further, from the results of Examples 1, 3, and 4, it was found that the quick charge cycle characteristic is improved when the applied mass per unit area is larger for the first negative electrode mixture layer than for the second negative electrode mixture layer. It is considered that this is because the amount of the electrolyte solution permeating the negative electrode mixture layer becomes optimized. Further, in Examples 1 to 4, it was ascertained that a high-capacity battery can be obtained.

REFERENCE SIGNS LIST

10 secondary battery; 11 positive electrode; 12 negative electrode; 13 separator; 14 electrode assembly; 15 outer casing; 16 sealing assembly; 17 ,18 insulating plate; 19 positive electrode lead; 20 negative electrode lead; 21 grooved portion; 22 filter; 23 lower valve member; 24 insulating member; 25 upper valve member; 26 cap; 26a opening; 27 gasket; 30 negative electrode current collector; 32 negative electrode mixture layer; 32a first negative electrode mixture layer; 32b second negative electrode mixture layer.

**Claims**

1. A non-aqueous electrolyte secondary battery, comprising

   a negative electrode including a negative electrode current collector, a first negative electrode mixture layer provided on a surface of the negative electrode current collector, and a second negative electrode mixture layer provided on a surface of the first negative electrode mixture layer, wherein
   the first negative electrode mixture layer and the second negative electrode mixture layer contain graphite particles,
   a ratio (S2/S1) of an interparticle porosity (S2) of the graphite particles in the second negative electrode mixture layer to an interparticle porosity (S1) of the graphite particles in the first negative electrode mixture layer is 1.1 to 2.0, and
   a ratio (D2/D1) of a packing density (D2) of the second negative electrode mixture layer to a packing density (D1) of the first negative electrode mixture layer is 0.9 to 1.1.

2. The non-aqueous electrolyte secondary battery according to claim 1, wherein the ratio (S2/S1) of the interparticle porosity (S2) the graphite particles in the second negative electrode mixture layer to the interparticle porosity (S1) of the graphite particles in the first negative electrode mixture layer is 1.1 to 1.7.

3. The non-aqueous electrolyte secondary battery according to claim 1 or 2, wherein the packing density (D1) of the first negative electrode mixture layer and the packing density (D2) of the second negative electrode mixture layer are 1.3 g/m$^3$ to 2.0 g/m$^3$.

4. The non-aqueous electrolyte secondary battery according to any one of claims 1 to 3, wherein at least one of the first negative electrode mixture layer and the second negative electrode mixture layer contains a Si-based material.

Figure 1

Figure 2

<table>
<tr><td colspan="2" align="center">**INTERNATIONAL SEARCH REPORT**</td><td>International application No.<br>PCT/JP2020/043104</td></tr>
</table>

**A. CLASSIFICATION OF SUBJECT MATTER**
Int.Cl. H01M4/133(2010.01)i, H01M4/134(2010.01)i, H01M4/36(2006.01)i, H01M4/48(2010.01)i
FI: H01M4/133, H01M4/48, H01M4/134, H01M4/36E
According to International Patent Classification (IPC) or to both national classification and IPC

**B. FIELDS SEARCHED**

Minimum documentation searched (classification system followed by classification symbols)
Int.Cl. H01M4/133, H01M4/134, H01M4/36, H01M4/48

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2015-511389 A (LG CHEMICAL LTD.) 16 April 2015 (2015-04-16), paragraphs [0017], [0028], [0029], [0039]-[0041], [0057]-[0060], [0069] | 1-4 |
| A | JP 2016-042460 A (SAMSUNG SDI CO., LTD.) 31 March 2016 (2016-03-31), paragraph [0006] | 1-4 |
| A | JP 2015-537347 A (NEXEON LIMITED) 24 December 2015 (2015-12-24), paragraphs [0099], [0146] | 1-4 |
| P, A | JP 2020-095853 A (TOYOTA MOTOR CORPORATION) 18 June 2020 (2020-06-18) | 1-4 |
| P, A | JP 2020-145143 A (SEKISUI CHEMICAL CO., LTD.) 10 September 2020 (2020-09-10) | 1-4 |

☐ Further documents are listed in the continuation of Box C.      ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>21 January 2021 | Date of mailing of the international search report<br>02 February 2021 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

**INTERNATIONAL SEARCH REPORT**
Information on patent family members

International application No.

PCT/JP2020/043104

| | | |
|---|---|---|
| JP 2015-511389 A | 16 April 2015 | US 2014/0287316 A1<br>paragraphs [0021], [0032], [0033],<br>[0043]-[0045], [0061]-[0064], [0073]<br>US 2017/0125788 A1<br>WO 2014/116029 A1<br>EP 2797142 A1<br>KR 10-2014-0095980 A<br>CN 104126242 A<br>CN 106935793 A<br>PL 2797142 T3 |
| JP 2016-042460 A | 31 March 2016 | US 2016/0049637 A1<br>paragraph [0012]<br>KR 10-2016-0020648 A<br>CN 105374981 A |
| JP 2015-537347 A | 24 December 2015 | US 2015/0280221 A1<br>paragraphs [0103], [0146]<br>GB 2507535 A<br>WO 2014/068318 A1<br>EP 2915204 A1<br>KR 10-2015-0086288 A<br>CN 104885262 A |
| JP 2020-095853 A | 18 June 2020 | (Family: none) |
| JP 2020-145143 A | 10 September 2020 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003077463 A
- JP 2006196457 A
- JP 2015511389 A